# EUROPÄISCHE PATENTANMELDUNG

(11) **EP 2 338 347 A2**
(43) Veröffentlichungstag der Anmeldung: **29.06.2011**
(21) Anmeldenummer: 10189539.9
(22) Anmeldetag: 01.11.2010
(51) Int. Cl.: A22C 11/00, B65G 15/14, B65G 21/12

(54) **Portionier- und/oder Transportvorrichtung zum Portionieren und/oder Transportieren von Würstchen oder anderen länglichen Lebensmittelprodukten**

(30) Priorität: 30.10.2009 DE 202009014671 U
(71) Anmelder: VEMAG Maschinenbau GmbH, 27283 Verden/Aller (DE)
(72) Erfinder: Bilowski, Jörg, 22941, Delingsdorf (DE)
(74) Vertreter: Eisenführ, Speiser & Partner

(57) **Zusammenfassung**

Die Erfindung betrifft eine Portionier- und/oder Transportvorrichtung (6) zum Portionieren und/oder Transportieren von Würstchen, mit einer Fördereinrichtung (20), die mindestens ein mittels eines Antriebsmotors antreibbares, mit einem Würstchen in Kontakt bringbares Förderelement (22, 24) zum Fördern der Würstchen aufweist. Erfindungsgemäß ist das mindestens eine Förderelement (22, 24) im Betrieb gegenüber einer Vertikalen (V) zur Seite bezogen auf eine Förderrichtung (13) geneigt angeordnet.

## Beschreibung

Die Erfindung betrifft eine Portionier- und/oder Transportvorrichtung zum Portionieren und/oder Transportieren von Würstchen, mit einer Fördereinrichtung, die mindestens ein mittels eines Antriebsmotors antreibbares, mit einem Würstchen in Kontakt bringbares Förderelement zum Fördern der Würstchen aufweist.

Vorrichtungen der zuvor genannten Art werden häufig zusammen mit einer Füllmaschine zum Einfüllen von Wurstbrät in schlauchförmige Hüllen (Natur- oder Kunstdärme) eingesetzt. Ein mit Wurstbrät gefüllter Darm wird in möglichst gleichmäßig lange, portionierte Würstchen unterteilt. Zu diesem Zweck kann durch Rotation eines Füllrohres der Füllmaschine eine Abdrehstelle erzeugt werden. Auch sind Vorrichtungen und Verfahren bekannt, bei denen portionierte Würstchen an ihren Enden mittels Klips verschlossen werden. Eine Portionier- und/oder Transportvorrichtung der eingangs genannten Art kann einer Füllmaschine nachgeschaltet sein, um den mit Wurstbrät gefüllten Darm bzw. portionierte Würstchen zu halten und weiter zu transportieren. Beispielsweise können die eine Kette bildenden Würstchen einer in Transportrichtung nachgeschalteten Vereinzelungs- oder Trennvorrichtung zugeführt werden. Die separierten Würstchen können dann weiter verarbeitet oder verpackt werden.

Die auf die hiesige Anmelderin zurückgehenden DE 100 13 036 A1 und EP 1 430 779 B1 zeigen bekannte Portionier- und/oder Transportvorrichtungen zum Portionieren und/oder Transportieren von Würstchen oder ähnlichen länglichen Lebensmittelprodukten.

Eine Vorrichtung der eingangs genannten Art unterstützt bei Füllmaschinen mit rotierbarem Füllrohr zur Herstellung von Abdrehstellen den Abdrehvorgang dadurch, dass der mit Wurstbrät gefüllte Darm an einem Mit-Drehen um seine Längsachse gehindert wird und so mittels des rotierbaren Füllrohres einzelne Abdrehstellen erzeugt werden können. Zu diesem Zweck werden bekanntermaßen als Band- oder Kettenförderer ausgebildete Fördereinrichtungen eingesetzt, welche umlaufende Endlos-Bänder oder Ketten aufweisen, die mit dem gefüllten Darm bzw. einem Würstchen in Kontakt kommen, die Würstchen an einem Drehen während des Abdrehvorgangs hindern und weiter fördern.

Während des Betriebs wird der Prozess von einem Bediener überwacht. Der Bediener achtet generell auf einen störungsfreien Betrieb und reagiert beim Auftreten von Fehlern. Ein Bediener achtet beispielsweise darauf, dass stets zu befüllende Därme bereitgehalten werden, der Abdrehvorgang und Transport der Würstchen ordnungsgemäß und störungsfrei abläuft. Im Falle des Auftretens von Darmplatzern muss der Prozess unterbrochen und neu gestartet werden.

Dabei spielt die visuelle Beobachtung eine besondere Rolle, insbesondere im Bereich der Portionier- und Transportvorrichtung. Dabei besteht ein Bedarf an einer Verbesserung.

Aufgabe der vorliegenden Erfindung ist es, eine Portionier- und/oder Transportvorrichtung von Würstchen oder anderen länglichen Lebensmittelprodukten bereitzustellen, welche eine Beobachtung des Prozesses durch einen Bediener erleichtert.

Die Aufgabe wird erfindungsgemäß durch eine Portionier- und/oder Transportvorrichtung der eingangs genannten Art dadurch gelöst, dass das mindestens eine Förderelement im Betrieb gegenüber einer Vertikalen V zur Seite bezogen auf eine Förderrichtung geneigt angeordnet ist (Anspruch 1).

Die Neigung des einen oder der mehreren Förderelemente erfolgt also gegenüber einer vertikalen Achse V und zur Seite hin bezogen auf eine Förder- oder Transportrichtung der Würstchen. Besonders vorteilhaft ist eine seitliche Neigung in Richtung auf eine seitlich neben der Transportvorrichtung stehenden Bedienperson, an welcher die Würstchen beispielsweise von rechts nach links oder von links nach rechts, je nach Gestaltung der Transportvorrichtung vorbeilaufen. Durch die seitliche Neigung eines oder insbesondere mehrerer Förderelemente kann ein seitlich neben der Vorrichtung stehender Bediener den Prozess deutlich besser visuell beobachten. Insbesondere kann er den mit Wurstbrät gefüllten Darm bzw. die portionierten Würstchen deutlich besser während des Abdrehens und des Transportes beobachten. Dies liegt daran, dass aufgrund der erfindungsgemäßen seitlichen Neigung des oder der Förderelemente diese die Würstchen aus der Perspektive des Bedieners deutlich weniger verdecken. Der Bediener kann dadurch den Prozess vollständiger beobachten, schneller etwaige Fehler im Prozess wahrnehmen und darauf reagieren. Durch die bessere Sichtbarkeit kann ein Bediener auch eine günstigere Körperhaltung einnehmen, was die Konzentrationsfähigkeit erhöht und Ermüdungserscheinungen entgegenwirkt. Insgesamt kann eine schnellere und zuverlässigere Fehleranalyse erreicht werden. Darüber hinaus ergibt sich auch im Hinblick auf die Handhabung der Vorrichtung ein Vorteil. Das Aufziehen eines neuen gerafften Darmes auf ein Füllrohr einer benachbarten Füllmaschine wird durch die geneigte Anordnung ebenfalls erleichtert. Der Bediener kann den Aufziehvorgang besser beobachten und ihm steht ein größerer Freiraum zum Einfädeln und Aufziehen des Darmes zur Verfügung, was zu kürzeren Betriebsunterbrechungen führt.

Darüber hinaus ergibt sich gegenüber einer vertikalen Anordnung des oder der Förderelemente, wie aus dem Stand der Technik bekannt, der Vorteil, dass der gefüllte Darm bzw. die Würstchen aufgrund der Schwerkraftwirkung leicht seitlich in Richtung auf ein Förderelement gedrückt werden, so dass es zu einer definierten Anlage kommt.

Besonders bevorzugt ist es, dass das mindestens eine Förderelement unter einem Winkel von etwa 10 bis 80° besonders bevorzugt etwa 30° oder 75° geneigt ist. In diesen Neigungswinkelbereichen ergibt sich eine besonders gute Sichtbarkeit des Verabeitungsprozesses der Würstchen.

Gemäß einer besonders bevorzugten Ausführungsform ist vorgesehen, dass die Fördereinrichtung als Band- oder Kettenförderer mit umlaufenden Bändern oder Ketten ausgebildet ist, die mittels um geneigte Achsen drehbaren Rädern gelagert sind. Durch Band-oder Kettenförderer lässt sich ein Würstchen oder eine Würstchenkette besonders gleichmäßig und sicher halten und transportieren. Ein Bediener kann von schräg oben sehr gut die Würstchen und den gesamten Prozess beobachten. Besonders bevorzugt ist es, dass die Fördereinrichtung mindestens zwei geneigt angeordnete, gegenüberliegende Bänder oder Ketten aufweist, zwischen denen die Würstchen während der Portionierung bzw. des Transportes angeordnet sind.

Gemäß einer bevorzugten Weiterbildung der Erfindung wird vorgeschlagen, dass die gesamte Fördereinrichtung geneigt an einem Gestell angeordnet ist. So ergibt sich eine einfache und stabile Konstruktion. Bei dem Gestell kann es sich um ein übliches Maschinengestell handeln, welches im Wesentlichen aus Streben und Blechen zusammengesetzt ist.

Gemäß einer alternativen Ausführungsform wird vorgeschlagen, dass die Fördereinrichtung an einer Trageinrichtung angeordnet und die gesamte Trageinrichtung gegenüber einer Vertikalen geneigt angeordnet ist. Bei der Trageinrichtung kann es sich um eine in veränderbaren Positionen lagerbare Platte, einen Rahmen oder dergleichen handeln, die an einem Gestell befestigt ist.

Eine einfache Verstellbarkeit der Neigung ergibt sich, wenn die Trageinrichtung zusammen mit den Förderelementen in unterschiedliche Neigungswinkel verstellbar und in unterschiedlichen Neigungswinkeln feststellbar ist. Vorzugsweise kann die Trageinrichtung um eine im Wesentlichen horizontale Schwenkachse verschwenkbar sein. Alternativ oder zusätzlich ist es bevorzugt, dass die Trageinrichtung telekopierbare Rohre aufweist.

Eine besonders günstige Positionierbarkeit der gesamten Portionier- und/oder Transportvorrichtung ergibt sich dadurch, dass die Fördereinrichtung an einem auf Rollen verfahrbaren Gestell montiert ist, so dass die Vorrichtung optimal relativ zu einem Füllrohr einer Füllmaschine positionierbar ist.

Eine alternative Ausführungsform sieht vor, dass die Förderelemente als Rollen ausgebildet sind, die jeweils um eine geneigte Achse drehbar gelagert sind, und dass in Förderrichtung mehrere Rollen nebeneinander und die mehreren Rollen in zwei beabstandeten Reihen angeordnet sind, zwischen denen die Würstchen während der Portionierung bzw. des Transportes angeordnet sind. So kann eine Art Rollenbahn zum Fördern von Würstchen oder länglichen Lebensmittelprodukten realisiert sein, deren Führungs- oder Antriebs-Rollen vorzugsweise in Richtung auf eine Seite zum Bediener hin geneigt sind, so dass dieser den Prozess möglichst bequem und vollständig beobachten kann.

Gemäß einer vorteilhaften Weiterbildung wird vorgeschlagen, dass die Fördereinrichtung zusätzlich in bzw. entgegen der Förderrichtung der Würstchen axial verfahrbar gelagert und in einer Position fixierbar ist. Dadurch lassen sich die Förderelemente zusätzlich axial relativ zu einer Füllmaschine ausrichten, ohne die gesamte Vorrichtung verschieben zu müssen.

Die Erfindung löst gemäß eines weiteren Aspektes die oben genannte Aufgabe durch eine Vorrichtung zum Herstellen und Verarbeiten von Würstchen gemäß Anspruch 13, die dadurch gekennzeichnet ist, dass das mindestens eine Förderelement im Betrieb gegenüber einer Vertikalen zur Seite bezogen auf eine Förderrichtung geneigt angeordnet ist.

Durch die Kombination einer Füllmaschine, Abdreheinrichtung sowie einer Portionier-und/oder Transportvorrichtung mit seitlich geneigten Förderelementen ist ein vorteilhaftes Gesamtsystem zum Herstellen und Verarbeiten von Würstchen verwirklicht. Hinsichtlich der erreichten Vorteile wird auf die obigen Beschreibungen Bezug genommen.

Die Erfindung ist nachstehend anhand von bevorzugten Ausführungsbeispielen unter Bezugnahme auf die Zeichnungen beschrieben. Es zeigen:
- Figur 1: eine Vorrichtung zum Herstellen und Verarbeiten von Würstchen mit einer Füllmaschine und einer Portionier- und/oder Transportvorrichtung für Würst- chen in einer Seitenansicht;
- Figur 2: die Vorrichtung aus Figur 1 in einer Draufsicht;
- Figur 3: die Vorrichtung aus Figur 1 in einer stirnseitigen Seitenansicht;
- Figur 4: ein Teil der erfindungsgemäßen Portionier- und/oder Transportvorrichtung in einer Seitenansicht;
- Figur 5: ein Teil der erfindungsgemäßen Portionier- und/oder Transportvorrichtung in einer Draufsicht;
- Figur 6: eine vergrößerte Seitenansicht der Fördereinrichtung der zuvor beschriebe- nen Portionier- und/oder Transportvorrichtung;
- Figur 7: ein erstes alternatives Ausführungsbeispiel einer geneigten Fördereinrich- tung;
- Figur 8: ein zweites alternatives Ausführungsbeispiel einer geneigten Fördereinrich- tung;
- Figur 9: ein drittes alternatives Ausführungsbeispiel einer Fördereinrichtung;
- Figur 10: ein viertes alternatives Ausführungsbeispiel einer Fördereinrichtung in einer Seitenansicht und
- Figur 11: ein Ausschnitt der Fördereinrichtung gemäß Figur 10 in einer vergrößerten Ansicht.

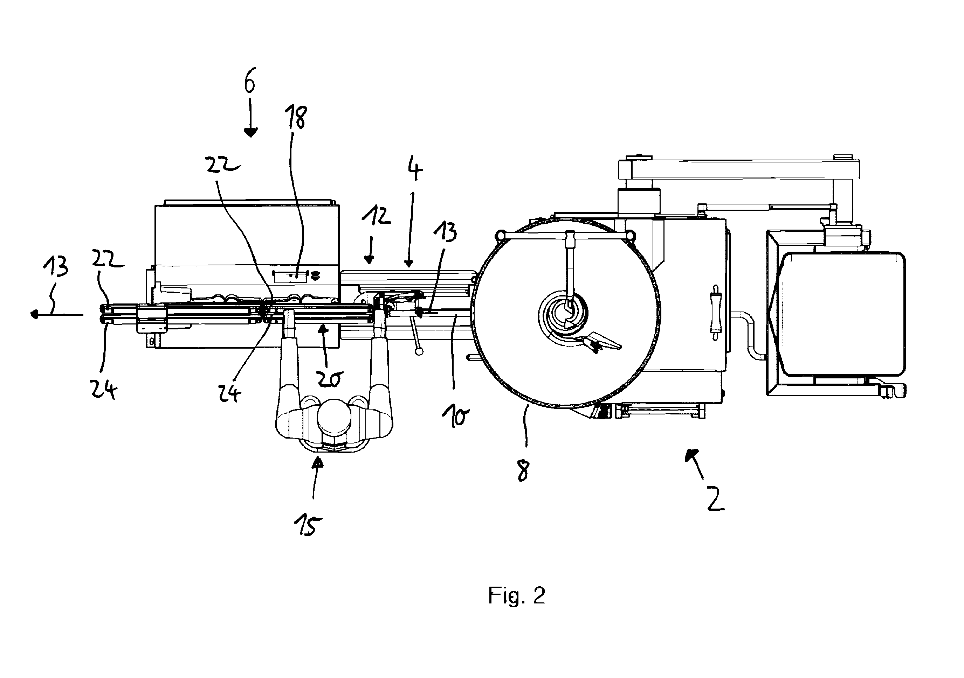

Die in Figur 2 dargestellte Gesamt-Vorrichtung 1 dient zum Herstellen und Verarbeiten von Würstchen. Sie umfasst eine Füllmaschine 2 zum Einfüllen von Wurstmasse in eine Hülle aus Natur- oder Kunst-Darm, eine Abdreheinrichtung 4 zum Herstellen von Abdrehstellen zum Erzeugen von portionierten Würstchen sowie eine Portionier-und/oder Transportvorrichtung 6 zum Portionieren und/oder Transportieren der Würstchen, welche nachfolgend auch Transportvorrichtung 6 genannt ist. Mittels einer nicht gezeigten Steuerungseinrichtung, welche Teil der Füllmaschine 2 oder der Transporrtvorrichtung 6 sein kann, können sämtliche Komponenten der Füllmaschine 2, der Abdreheinrichtung 4 und der Transportvorrichtung 6 gesteuert und/oder überwacht werden.

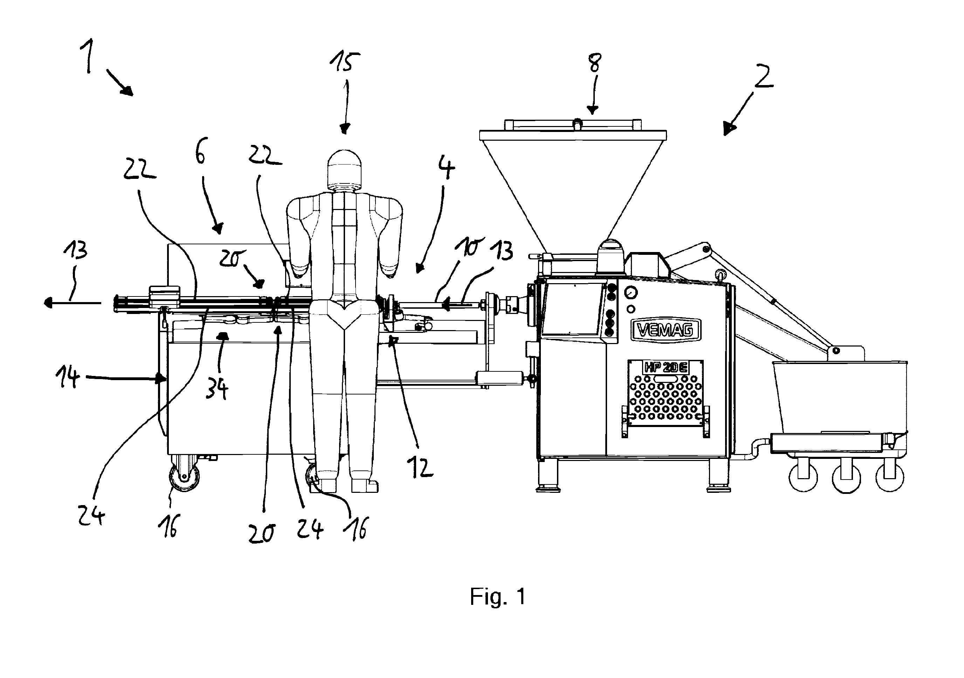

Die Füllmaschine 2 weist einen Trichter 8 zur Aufnahme von Wurstbrät, eine mit dem Trichter 14 kommunizierende Füllpumpe (nicht gezeigt) und ein mittels der Füllpumpe mit Wurstbrät speisbares Füllrohr 10 auf, auf welches ein geraffter Darm aufziehbar ist und durch dessen offenes Ende (in Figur 1 und 2 links) Wurstbrät in den Darm einfüllbar ist. In Förderrichtung des Wurstbräts sowie der portionierten Würstchen, angedeutet durch Pfeil 13, schließt sich stromabwärts an das Füllrohr 10 ein Übergangsbereich 12 an, an dem der gefüllte Darm an die Transportvorrichtung 6 übergeben wird und wo durch Rotieren des Füllrohres 10 und gleichzeitiges Halten des gefüllten Darms im Bereich der Transportvorrichtung 12 Abdrehstellen zwischen portionierten Würstchen gebildet werden.

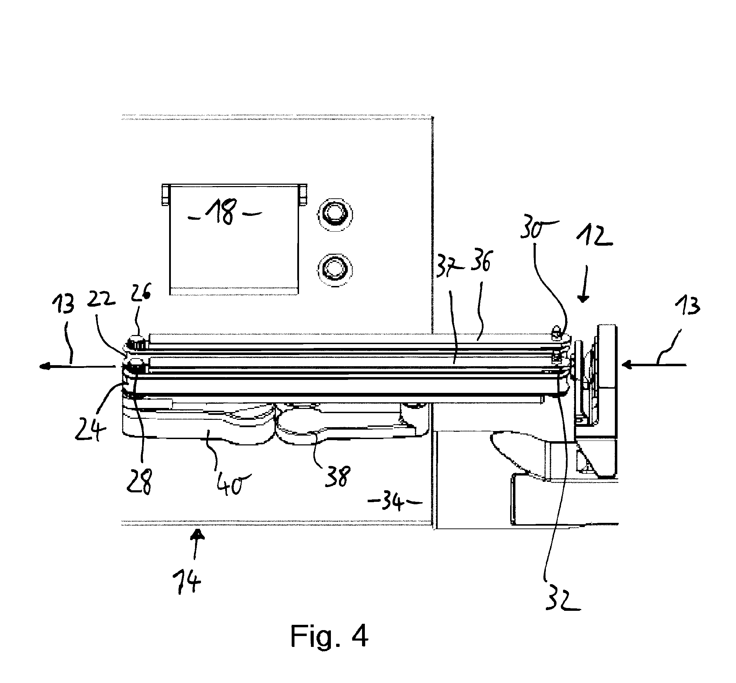

Die Portionier- und/oder Transportvorrichtung 6 weist ein Rahmengestell 14 sowie vier an diesem befestigte Rollen 16 auf, welche so arretierbar sind, dass die gesamte Transportvorrichtung 6 nach dem Verfahren und Positionieren feststellbar ist. Wie Figur 4 gut zeigt, ist ein Bedienfeld 18 an dem Rahmengestell 14 angeordnet, so dass ein Bediener 15 die Transportvorrichtung 6 und ggf. weitere Komponenten der Vorrichtung 1 bedienen und steuern kann.

Eine Fördereinrichtung 20 ist an dem Rahmengestell 14 montiert und dient zum Halten und Fördern des gefüllten Darms bzw. der portionierten Würstchen. Die Fördereinrichtung 20 ist im Ausführungsbeispiel als Bandförderer mit umlaufenden Endlos-Bändern in Form von Zahnriemen ausgebildet. Sie könnte alternativ als Kettenförderer mit umlaufenden Ketten ausgebildet sein oder als Rollen-Förderer mit einer Vielzahl von Rollen. In jedem Fall bilden die Bänder, Ketten oder Rollen Förderelemente zum Fördern der Würstchen. Die Würstchen bzw. der mit Wurstbrät gefüllte Darm kommt mit diesen Förderelementen 22, 24 in Kontakt. Dadurch, dass die Förderelemente 22, 24 angetrieben werden in Förderrichtung (Pfeil 13), werden die Würstchen transportiert.

Die Fördereinrichtung 20 weist ein erstes Paar von gegenüberliegenden Bandförderern auf (in Fig. Rechts), die jeweils als ein Förderelement 22, 24 in Form von Zahnriemen mit Innenverzahnung aufweisen. Optional ist ein weiteres, in Figur 2 linkes Paar von gegenüberliegenden Bandförderern mit Förderelementen 22, 24 an das erste in Figur 2 rechte Paar stromabwärts angeschlossen, um die Würstchen weiter in Förderrichtung 13 transportieren zu können.

Wie insbesondere die Figuren 4 bis 6 veranschaulichen, sind die als Zahnriemen ausgebildeten Förderelemente 22, 24 mittels jeweils eines Zahnrades 26, 28 antreibbar, welches mit der Innenverzahnung des Förderelementes 22, 24 in Eingriff steht. Jedes Zahnrad 26, 28 ist auf eine Welle montiert, welche mittels eines nicht gezeigten Antriebsmotors, vorzugsweise eines Elektromotors, antreibbar ist. An dem den Zahnrädern 26, 28 gegenüberliegenden Enden ist jeweils eine Umlenkrolle 30, 32 angeordnet, um das als Zahnriemen ausgebildete Förderelement 22, 24 gespannt zu halten und umzulenken.

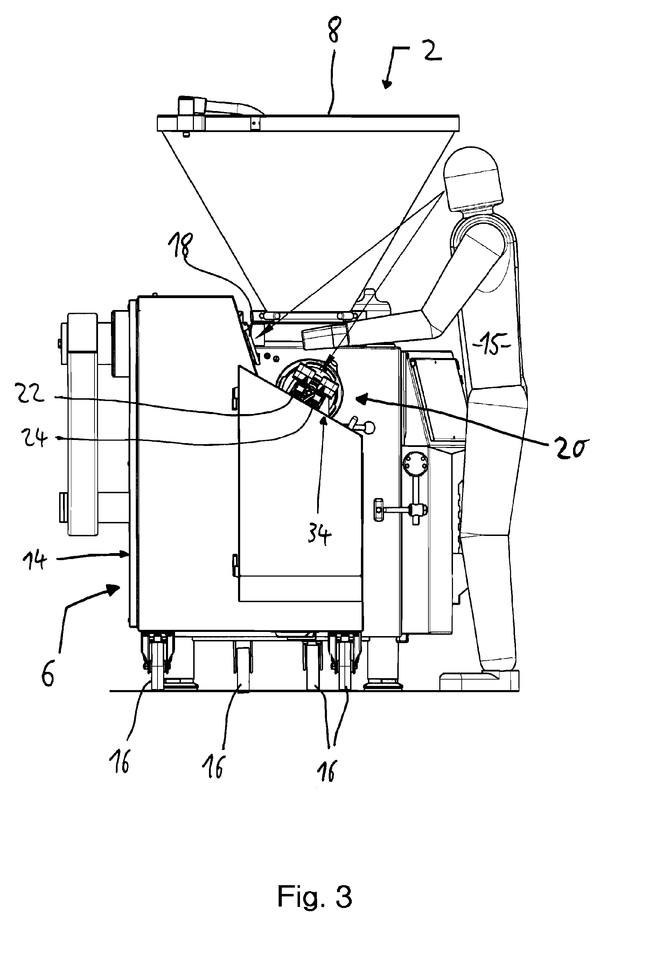

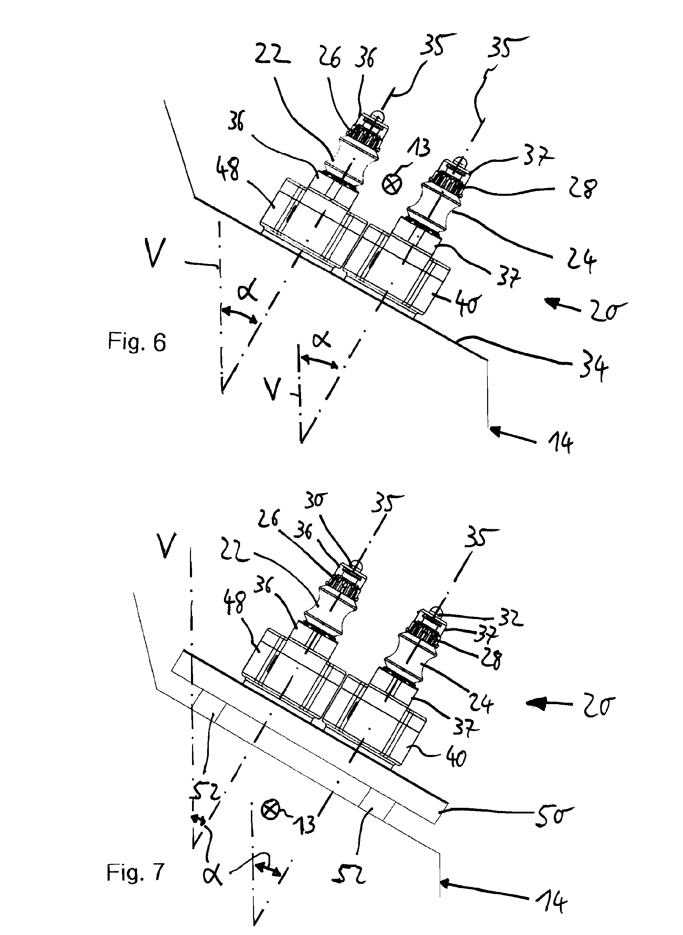

Wie die Figuren 1-9 veranschaulichen, ist die Fördereinrichtung 20 und damit die Förderelemente 22, 24 gegenüber einer Vertikalen V geneigt angeordnet. Die Neigung ist seitlich bezogen auf die Förderrichtung 13. Im Ausführungsbeispiel gemäß Figur 1 bis 6 ist die gesamte Fördereinrichtung 20 an einer schräg und damit geneigt angeordneten Platte 34 des Rahmengestells 14 montiert. Die Dreh-Achsen 35 der Rollen 26, 28, 30, 32 sind damit in einem Winkel α gegenüber einer Vertikalen V geneigt. Der Winkel α beträgt im Ausführungsbeispiel etwa 10 bis 80°, besonders bevorzugt etwa 30°. Damit sind auch die Förderelemente 22, 24 seitlich gegenüber einer Vertikalen V geneigt, wobei die Neigung zu einer Seite bezogen auf die Förderrichtung 13 ist, also in Richtung auf den Bediener 15. Durch die geneigte Anordnung der Förderelemente 22, 24 bzw. der gesamten Fördereinrichtung 20 im Ausführungsbeispiel, hat ein Bediener 15 die Möglichkeit, aus einer günstigen Perspektive auf eine zwischen den Förderelementen 22, 24 angeordnete Wurst und damit in etwa in Richtung der Achsen 35 (Figur 6) auf die Würstchen zu blicken.

Jeder Bandförderer weist ein im Querschnitt doppelt T förmiges Führungselement 36, 37 in Form einer aus mehreren Teilen zusammengesetzten Schiene auf, um das als umlaufenden Zahnriemen ausgebildete Förderelement 22, 24 so zu führen, dass es nicht nach oben oder unten in Richtung der Achse 35 von den Zahnrädern 26, 28 bzw. den Rollen 30, 32 abrutscht, noch zu sehr aufgrund der von den Würstchen aufgebrachten Kraft eingedrückt wird.

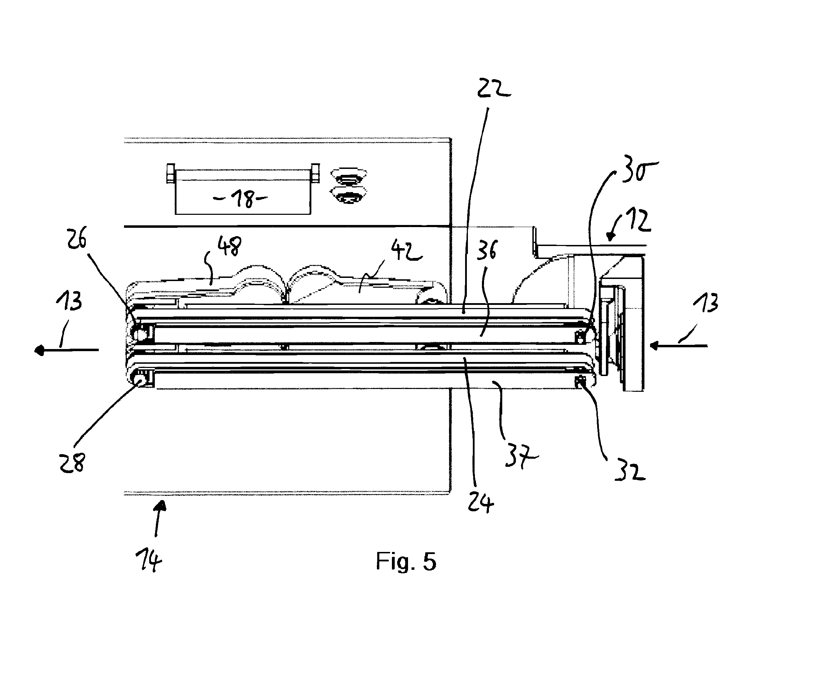

Wie Figur 4 zeigt, lassen sich die jeweils paarweise gegenüberliegenden Förderelemente 22, 24 mittels verschwenkbaren Armen 38, 40, 42, 44 (Figuren 4 und 5) so verfahren, dass der Abstand der Förderelemente 22, 24 veränderbar und an unterschiedliche WurstKaliber anpassbar ist. An den Armen 38, 42 sind jeweils die Führungselemete 36, 37 befestigt.

Bei den nachfolgend beschriebenen alternativen Ausführungsbeispielen sind gleiche oder funktionsgleiche Teile mit denselben Bezugszeichen versehen, wie zuvor anhand des vorherigen Ausführungsbeispiels beschrieben und es wird insoweit auf die obigen Beschreibungen vollumfänglich Bezug genommen. Nachfolgend werden im Wesentlichen Unterschiede gegenüber zuvor beschriebenen Ausführungsbeispiel beschrieben.

Bei dem in Figur 7 gezeigten alternativen Ausführungsbeispiel ist zwischen der Fördereinrichtung 20 und dem Rahmen-Gestell 14 eine Trageinrichtung 50 in Form einer Platte geschaltet, wobei die Trageinrichtung 50 gegenüber einer Vertikalen V geneigt ist in Richtung zur Seite und somit in Richtung auf einen Bediener 15. Das Traggestell 50 kann mittels Lager-Böcken 52 an dem Rahmengestell 14 befestigt sein.

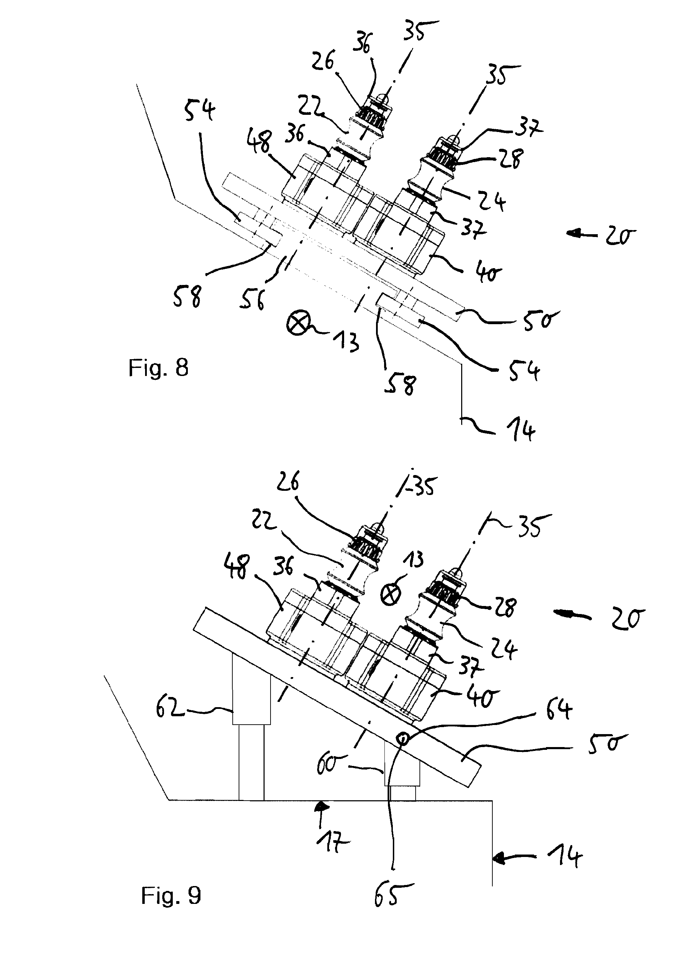

Figur 8 zeigt ein alternatives Ausführungsbeispiel, bei dem die Fördereinrichtung 20 axial in Richtung der Förderrichtung 13 verfahrbar ist. Hierzu ist die Trageinrichtung 50 in Form einer Platte mit mindestens vier drehbar gelagerten Rollen 54 verbunden, welche wiederrum entlang einer Lagerbox 56 verfahrbar sind, welcher an dem Rahmengestell 14 befestigt ist. Die Räder 54 sind innerhalb von Nuten 58 in dem Lagerbock 56 abrollbar. Alternativ sind Linearführungen oder Stangenführungen denkbar.

Bei dem in Figur 9 gezeigten alternativen Ausführungsbeispiel ist die Fördereinrichtung 20 ebenfalls auf einer plattenförmigen Trageinrichtung 50 montiert ist, welche seitlich geneigt angeordnet ist. Die Trageinrichtung 50 ist mittels mehrerer, beispielsweise vier teleskopierbarer Rohre 60, 62 in unterschiedliche Neigungswinkel verstellbar und feststellbar. Die Rohre 60, 62 stützen sich ihrerseits an einer horizontalen Platte 17 des Gestells 14 ab. Die Rohre 60, 62 können relativ zueinander in unterschiedlichen Längen beispielsweise festgeklemmt oder stufenweise mittels Bolzen, die durch Bohrungen hindurchsteckbar sind, festgestellt werden. Die Verbindung zwischen den oberen Enden der Rohre 60, 62 und der plattenförmigen Trageinrichtung 50 kann mittels Kugelgelenken oder anderen Lagerungsmitteln erfolgen.

In nicht gezeigter Weise kann in Abwandlung des Ausführungsbeispiels gemäß Figur 9 im Bereich der oberen Enden der Rohre 60, 62 ein scharnierartiges Drehgelenk vorgesehen sein, in Figur 9 angedeutet durch das Bezugszeichen 64, mit dessen Hilfe die Trageinrichtung 50 um eine Schwenk-Achse 65 verschwenkbar ist, so dass die Fördereinrichtung 20 und somit die Förderelemente 22, 24 sich in unterschiedlichen Neigungswinkeln anordnen lassen. Mittels des teleskopierbaren Rohres 62, welches in unterschiedliche Längen verfahrbar und feststellbar ist, kann dann ein einmal eingestellter Neigungswinkel erhalten bleiben.

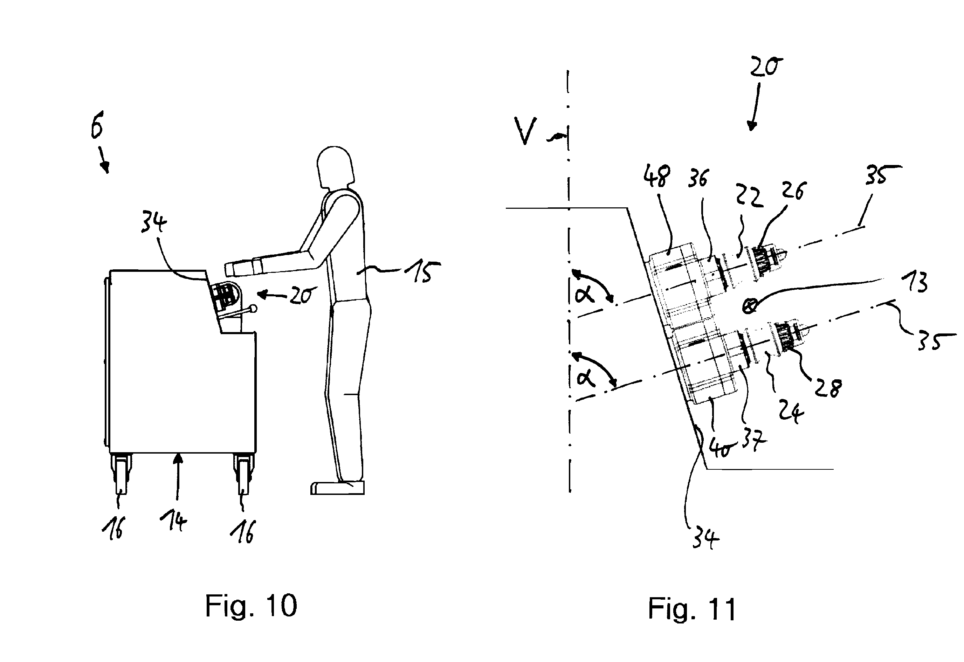

Die Figuren 10 und 11 zeigen ein alternatives Ausführungsbeispiel einer Fördereinrichtung 20. Dieses Ausführungsbeispiel ist prinzipiell ausgebildet wie das zuvor anhand der Figuren 1 bis 6 beschriebene Ausführungsbeispiel. Es wird hinsichtlich des Aufbaus und der Funktionsweise vollumfänglich auf die vorherigen Beschreibungen Bezug genommen, wobei gleiche oder im Wesentlichen gleiche Teile mit denselben Bezugszeichen versehen sind. Das in den Figuren 10 und 11 gezeigte Ausführungsbeispiel unterscheidet sich von dem zuvor Beschriebenen im Wesentlichen dadurch, dass der Neigungswinkel α gegenüber einer Vertikalen V verändert ist und zwar etwa 75 ° beträgt. Dieser Neigungswinkel α ist also auch in dem bevorzugten Winkelbereich von 10 ° bis 80 °. Auch durch diese geneigte Anordnung ergibt sich für einen Bediener eine günstige Perspektive auf die Förderelemente 22, 24, sowie die geförderten Würstchen.

Die Betriebsweise der erfindungsgemäßen Vorrichtungen 1 und 6 ist wie folgt: Wurstbrät wird aus dem Fülltrichter 8 mittels der Förderpumpe durch das Füllrohr 10 in Förderrichtung 13 gefördert und so aus dem offenen Ende des Füllrohres im Übergangsbereich 12 in einen Darm eingefüllt. Die durch Abdrehung an einer Abdrehstelle im Übergangsbereich 12 portionierten Würstchen werden von dem ersten Paar von Förderelementen 22, 24 der Fördereinrichtung 20 der Transportvorrichtung 6 weiter in Förderrichtung 13 gefördert. Sie werden an das zweite - linke - Bandpaar mit zwei weiteren Förderelementen 22, 24 übergeben und anschließend von der Transportvorrichtung 6 zur weiteren Verarbeitung abgegeben, beispielsweise zu Verpackungsmaschinen, Räucheranlagen, Trennvorrichtungen oder dergleichen. Ein Bediener 15 kann den Prozess aufgrund der geneigten Anordnung der Fördereinrichtung 20 und der Förderelementen 22, 24 die Würstchen gut beobachten, da er fast aus einer Perspektive in Richtung der Achsen 35 senkrecht auf die Fördereinrichtung 20 blicken kann.

Im Falle von veränderbaren Neigungswinkeln gemäß den Ausführungsbeispielen entsprechend Figur 9 kann der Neigungswinkel einer Maschine variabel eingestellt werden. In anderen Fällen ist der Neigungswinkel durch die jeweilige feste Anordnung der Fördervorrichtung 20 in einer geneigten Stellung vorgegeben.

## Patentansprüche

1. Portionier- und/oder Transportvorrichtung (6) zum Portionieren und/oder Transportieren von Würstchen,
mit einer Fördereinrichtung (20), die mindestens ein mittels eines Antriebsmotors antreibbares, mit einem Würstchen in Kontakt bringbares Förderelement (22, 24) zum Fördern der Würstchen aufweist,
**dadurch gekennzeichnet, dass** das mindestens eine Förderelement (22, 24) im Betrieb gegenüber einer Vertikalen (V) zur Seite bezogen auf eine Förderrichtung (13) geneigt angeordnet ist.

2. Vorrichtung nach Anspruch 1,
**dadurch gekennzeichnet, dass** das mindestens eine Förderelement (22, 24) unter einem Winkel (α) von etwa 10 bis 80°, besonders bevorzugt etwa 30° oder 75° geneigt ist.

3. Vorrichtung nach Anspruch 1 oder 2,
**dadurch gekennzeichnet, dass** die Fördereinrichtung (20) als Band- oder Kettenförderer mit umlaufenden Bändern oder Ketten ausgebildet ist, die mittels um geneigte Achsen (35) drehbaren Rädern (26, 28) und/oder Rollen (30, 32) gelagert sind.

4. Vorrichtung nach Anspruch 3,
**dadurch gekennzeichnet, dass** die Fördereinrichtung (20) mindestens zwei geneigt angeordnete, gegenüberliegende Bänder oder Ketten aufweist, zwischen denen die Würstchen während der Portionierung bzw. des Transportes angeordnet sind.

5. Vorrichtung nach Anspruch 3 oder 4,
**dadurch gekennzeichnet, dass** die gesamte Fördereinrichtung (20) geneigt an einem Gestell (14) angeordnet ist.

6. Vorrichtung nach mindestens einem der vorstehenden Ansprüche,
**dadurch gekennzeichnet, dass** die Fördereinrichtung (20) an einer Trageinrichtung (50) angeordnet sind und die gesamte Trageinrichtung (50) gegenüber einer Vertikalen (V) geneigt angeordnet ist.

7. Vorrichtung nach Anspruch 6,
**dadurch gekennzeichnet, dass** die Trageinrichtung (50) zusammen mit den Förderelementen (22, 24) in unterschiedliche Neigungswinkel verstellbar und in unterschiedlichen Neigungswinkeln feststellbar ist.

8. Vorrichtung nach Anspruch 7,
**dadurch gekennzeichnet, dass** die Trageinrichtung (50) um eine im Wesentlichen horizontale Schwenkachse (65) verschwenkbar ist.

9. Vorrichtung nach Anspruch 7,
**dadurch gekennzeichnet, dass** die Trageinrichtung (50) telekopierbare Rohre (60, 62) aufweist.

10. Vorrichtung nach einem der vorstehenden Ansprüche,
**dadurch gekennzeichnet, dass** die Fördereinrichtung (20) an einem auf Rollen (16) verfahrbaren Gestell (14) montiert ist.

11. Vorrichtung nach Anspruch 1 oder 2 und/oder 6 bis 8,
**dadurch gekennzeichnet, dass** die Förderelemente als Rollen ausgebildet sind, die jeweils um eine geneigte Achse drehbar gelagert sind, und dass in Förderrichtung mehrere Rollen nebeneinander und die mehreren Rollen in zwei beabstandeten Reihen angeordnet sind, zwischen denen die Würstchen während der Portionierung bzw. des Transportes angeordnet sind.

12. Vorrichtung nach mindestens einem der vorstehenden Ansprüche,
**dadurch gekennzeichnet, dass** die Fördereinrichtung (20) zusätzlich in bzw. entgegen der Förderrichtung (13) der Würstchen axial verfahrbar und in einer Position fixierbaren Stellung gelagert ist.

13. Vorrichtung (1) zum Herstellen und Verarbeiten von Würstchen, mit einer Füllmaschine (2) zum Einfüllen von Wurstmasse in eine Hülle,
einer Abdreheinrichtung (4) zum Herstellen von Abdrehstellen zum Erzeugen von portionierten Würstchen und
einer Portionier- und/oder Transportvorrichtung (6) zum Portionieren und/oder Transportieren der Würstchen,
mit einer Fördereinrichtung (20), die mindestens ein mittels eines Antriebsmotors antreibbares, mit einem Würstchen in Kontakt bringbares Förderelement (22, 24) zum Fördern der Würstchen aufweist,
**dadurch gekennzeichnet, dass** das mindestens eine Förderelement (22, 24) im Betrieb gegenüber einer Vertikalen (V) zur Seite bezogen auf eine Förderrichtung (13) geneigt angeordnet ist.

14. Vorrichtung nach Anspruch 13,
**dadurch gekennzeichnet, dass** die Portionier- und/oder Fördereinrichtung (6) nach mindestens einem der vorstehenden Ansprüche ausgebildet ist.
